# EUROPEAN PATENT APPLICATION

(11) **EP 2 166 499 A1**
(43) Date of publication of application: **24.03.2010**
(21) Application number: 09170334.8
(22) Date of filing: 15.09.2009
(51) Int. Cl.: G06Q 30/00

(54) **System for providing electronic commerce with active intervention on the part of the buyer**

(30) Priority: 19.09.2008 IT MI20081668
(71) Applicant: Igonos SA, 6900 Lugano (CH)
(72) Inventor: Sagramoso, Gabriele, 20149 Milano (IT); Cionti, Alfredo, 20122 Milano (IT)
(74) Representative: Modiano, Micaela Nadia

(57) **Abstract**

An electronic commerce system (1), comprising:
means (2) for connection to a telematic network, which are adapted to allow a customer to send an order for the purchase of products over the telematic network,
the system further comprising means (6) for the automatic recognition of said products, which are adapted to make it possible, after direct contact with a given product by the customer and after his decision to purchase it, to perform an automatic recognition of the product, in order to be able to then send a purchase order by way of the means (2) for connection to the telematic network, without a need for assigned personnel.

## Description

The present invention relates to a system for providing electronic commerce with active intervention on the part of the buyer. More specifically, the invention relates to a system for providing electronic commerce that integrates the characteristics of normal electronic commerce with the characteristics of retail sale.

As is known, electronic commerce is increasingly extensive and widespread internationally, and a growing number of people purchase goods and products on the Internet, viewing the products on the sites provided for this purpose and making the purchase by paying usually with a credit card, prepaid card or the like.

Although this solution can be attractive and extremely effective for certain types of products, such as for example electronic products and the like, where it is sufficient for the user to know the technical characteristics of the product in order to be able to decide whether to purchase it or not, electronic commerce of the conventional type is absolutely not efficient and satisfactory as regards the purchase of products in which the visual inspection of the product by the buyer is essential prior to confirming the purchase.

Reference is made in particular to products such as for example items of clothing and the like, where it is indispensable for the buyer to be able to try the item of clothing in order to check its exact fit, without necessarily having to trust buying a size that is presumed to be right.

As regards for example clothing, it is in fact known that different products, though having the same size, can have very different fits, and therefore the buyer, in order to be able to make a purchase on the Internet, necessarily has to trust buying the size that he usually wears, without however being able to know whether the brand that he is purchasing has a conventional fit or not.

Moreover, regardless of the size issue, it is important for many products that the user be able to verify their quality by touch, since he cannot base his decision exclusively on the observation of products by means of photographs that can be placed on the site where the buyer wishes to make a purchase.

This problem is currently unresolved, since the buyer is offered no possibility to view the products directly before buying them, except by viewing, as mentioned, photographs thereof on the Internet site where the buyer is making his purchases.

The aim of the present invention is to provide an electronic commerce system that allows the buyer to perform electronic commerce of the traditional type combined with the possibility to view directly the products that he is purchasing before making the purchase.

Within this aim, an object of the present invention is to provide an electronic commerce system that allows operators to minimize in any case the personnel employed for sales, without therefore renouncing the advantages of purely electronic commerce.

Another object of the present invention is to provide an electronic commerce system that allows the buyer to perform electronic commerce in a sales structure that is substantially similar to that of a retail shop.

Another object of the present invention is to provide an electronic commerce system that is highly reliable, relatively simple to provide and has competitive costs.

This aim, as well as these and other objects that will become better apparent hereinafter, are achieved by an electronic commerce system, comprising:
means for connection to a telematic network, which are adapted to allow a customer to send an order for the purchase of products over said telematic network,
**characterized in that** it comprises means for the automatic recognition of said products, which are adapted to make it possible, after direct contact with a given product by the customer and after his/her decision to purchase it, to perform an automatic recognition of said product, in order to be able to then send a purchase order by way of said means for connection to the telematic network, without a need for assigned personnel.

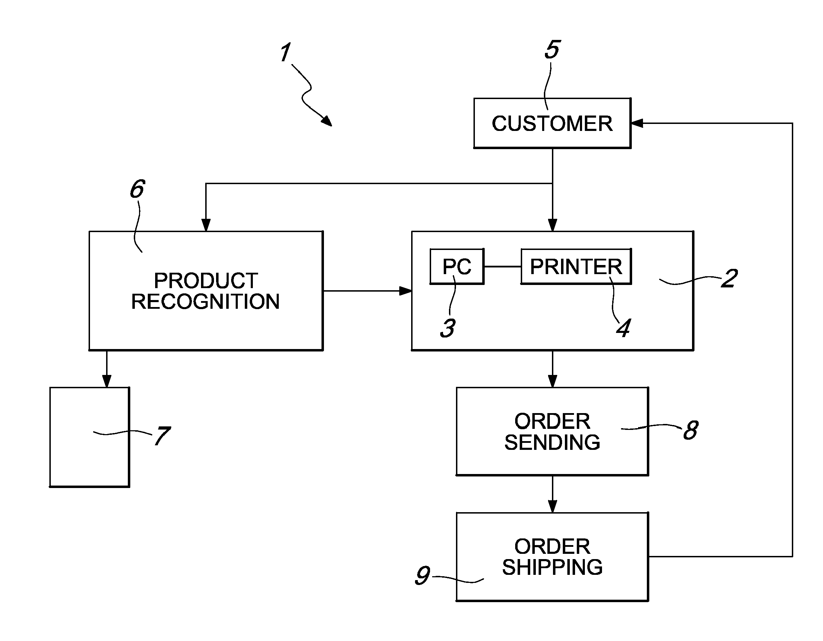

Further characteristics and advantages of the invention will become better apparent from the description of a preferred embodiment of the system according to the present invention, illustrated by way of non-limiting example in the accompanying drawing, wherein the only figure is a block diagram of the electronic commerce system according to the present invention.

With reference to the figure, the electronic commerce system according to the present invention, generally designated by the reference numeral 1, comprises means 2 for connection to a telematic network, such as for example the Internet, for performing electronic commerce. These means provide for at least one electronic computer 3, which is connected for example to a printer and to a badge reader 4, by means of which a user 5 can access the Internet to begin an electronic commerce operation.

The peculiarity of the invention consists in that the user, besides being able to perform electronic commerce of the traditional type, can view and try, by touching with his/her hands, the products that he/she wishes to purchase, because the system according to the invention provides product recognition means 6, such products being arranged in a point of sale where the user or customer 5 can view the products that he/she wishes to purchase by electronic commerce.

Substantially, the buyer touches the desired products or tries them on, by wearing them, in the case of items of clothing (or tries the fragrance in the case of perfumes, tastes in the case of foods or beverages or others), deciding then to purchase only when he/she is certain of the choice that he/she has made.

At this point, the customer 5, by way of the product recognition means, performs the automated recognition of the products in order to be able to start the conventional electronic commerce step, using the electronic computer 3 to be able to access the Internet and then fill in the purchase order.

Conveniently, the product recognition means 6 can comprise for example means for reading bar codes, RFIDs or others, which transmit the information for the chosen product to local software for electronic commerce management, which resides on the electronic computer 3.

The customer 5 might have the possibility to try, for example for items of clothing, the products in the different sizes, without however having at his disposal all the available color variations. In this case, after choosing the product, the user performs its recognition by way of the recognition means 6 and then, by means of the electronic computer 3, he/she places an order, indicating the size of the chosen product and instead selecting, by means of an on-screen choice, the color that he/she prefers.

All the operations cited above occur without the need for the presence of dedicated personnel.

Conveniently, the product recognition means can be connected to means 7 for recognizing the physical characteristics of the person, for example electronic scales, and for height measurement in order to choose the ideal size, and sensors that allow measurement of the physical characteristics of a person (for example chest size), et cetera.

Moreover, the electronic commerce system according to the invention provides for continuous control, by means of the RFIDs and/or an anti-theft system, that the products on display are available, and for selection of missing products.

Once the user has made the order by means of the electronic computer 3, the order is sent, as indicated by the block 8 in the figure, which is followed by a step for shipping the order, step 9, in order to make the order arrive at the address that the customer entered during the step for filling in the order.

Order management occurs conventionally, as for electronic commerce of the known type, outside the point of sale where the user has been able to view the products and place the order.

The system according to the invention therefore makes it possible to confirm the received orders and manage information also for any market research, to record receipts, remove documents for pickup or in the case of an automated storage system for preparing the transaction, preparing the shipping documents and sending the tracking information to the buyer, sending e-mail and SMS for shipment tracking, managing the availability of products and reorder levels, and checking with the software of the shipping agent whether the product has arrived at its destination and report any exceptions thereof.

In practice it has been found that the electronic commerce system according to the present invention achieves the intended aim and objects, since it allows the customer to make a direct choice of the product that he wishes to buy, being able to view its characteristics and try its quality, to then proceed with sending an order in a fully electronic manner, without the need for the presence of assigned personnel.

Therefore, the electronic commerce system according to the present invention can be introduced advantageously in existing points of sale, in which it is possible to provide an area that is dedicated to electronic commerce of a particular type, with access of the customer to the products, without requiring the presence of an assigned operator.

The system thus conceived is susceptible of numerous modifications and variations, all of which are within the scope of the appended claims.

All the details may further be replaced with other technically equivalent elements.

The disclosures in Italian Patent Application No. MI2008A001668 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An electronic commerce system (1), comprising:
means (2) for connection to a telematic network, which are adapted to allow a customer to send an order for the purchase of products over said telematic network,
**characterized in that** it comprises means (6) for the automatic recognition of said products, which are adapted to make it possible, after direct contact with a given product by the customer and after his/her decision to purchase it, to perform an automatic recognition of said product, in order to be able to then send a purchase order by way of said means (2) for connection to the telematic network, without the need for assigned personnel.

2. The system according to claim 1, **characterized in that** said means (6) for automated recognition of products comprise means for reading bar codes.

3. The system according to claim 1, **characterized in that** said means (6) for the automated recognition of products comprise RFIDs suitable to transmit the information for said product chosen by the customer to said means (2) for connection to the telematic network.

4. The system according to one or more of the preceding claims, **characterized in that** said means (2) for connection to a telematic network comprise at least one electronic computer (3).

5. The system according to claim 1, **characterized in that** it comprises means (7) for detecting the physical characteristics of the customer.

6. A method for performing electronic commerce, comprising the steps of:
sending, on the part of the customer, an order in electronic format for the purchase of a given product, said order being sent by way of processing means (3) suitable to connect to a telematic network,
**characterized in that** it comprises the steps of
prior to sending said order, viewing directly, on the part of the customer, the product to be purchased, being able to check its quality;
performing, by way of automated recognition means (7), a recognition of said product, in order to send the characteristics of the product to said processing means (3), in order to send said order.
